# EUROPÄISCHE PATENTSCHRIFT

(11) **EP 4 310 012 B1**
(45) Veröffentlichungstag und Bekanntmachung des Hinweises auf die Patenterteilung: **01.01.2025**
(21) Anmeldenummer: 22186443.2
(22) Anmeldetag: 22.07.2022
(51) Int. Cl.: B65B 43/46, B65B 43/54, B65B 57/12, B65B 7/28, B65B 3/00, B65G 54/02

(54) **BEARBEITUNGSVORRICHTUNG UND VERWENDUNG**
PROCESSING DEVICE AND USE
DISPOSITIF DE TRAITEMENT ET UTILISATION

(43) Veröffentlichungstag der Anmeldung: 24.01.2024
(73) Patentinhaber: TT Innovation AG, 6300 Zug (CH)
(72) Erfinder: Henzmann, Simon Daniel, 4052 Basel (CH); Huelin, Florian Simon, 5210 Windisch (CH); De Maddalena, Tobias, 4303 Kaiseraugst (CH)
(74) Vertreter: Mertzlufft-Paufler, Cornelius

(56) Entgegenhaltungen:
- EP-B1- 3 172 819
- IT-A1- 201800 005 535

## Beschreibung

Die Erfindung betrifft eine Bearbeitungsvorrichtung mit wenigstens einer Bearbeitungsstation und wenigstens einer Transportvorrichtung, wobei die Transportvorrichtung zu einem Transport wenigstens einer magnetisch levitierten Transporteinheit, die zur Aufnahme eines Bearbeitungsgegenstands eingerichtet ist, zur und/oder von der wenigstens einen Bearbeitungsstation eingerichtet ist, wobei die Bearbeitungsstation zum Einbringen einer Bearbeitungskraft auf den Bearbeitungsgegenstand eingerichtet ist.

Derartige Bearbeitungsvorrichtungen werden beispielsweise zum Verschließen insbesondere pharmazeutischer Geräte verwendet, sodass einzelne Teile der Geräte nicht mehr voneinander getrennt werden können. Ferner können pharmazeutische Produkte und/ oder Medizinprodukte montiert werden. Dabei kann die durch die Bearbeitungsstation einzubringende Bearbeitungskraft hoch sein. Diese Bearbeitungskraft, welche insbesondere eine Druck- und/oder Zugkraft und/oder ein Drehmoment und/oder eine Torsionskraft sein kann, wird über die magnetisch levitierende Transporteinheit, welche vorzugsweise den Bearbeitungsgegenstand zur Bearbeitungsstation transportiert, abgeleitet, was nachteilig ist. Nachteilig kann insbesondere sein, dass die abgeleitete Bearbeitungskraft auf eine elektromagnetische Statoranordnung, mit welcher die Transporteinheit magnetisch gekoppelt ist, abgeleitet wird, da diese vorzugsweise als Widerlager fungieren kann. Somit kann die Transportvorrichtung beschädigt werden, wodurch Prozesse verhindert oder zumindest verlangsamt werden. Ferner können Wartungs- bzw. Reparaturkosten der Transportvorrichtung erheblich sein, was sich auf die Produktkosten negativ auswirken kann.

Es ist bekannt, dass aufgrund der zuvor genannten Nachteile die Bearbeitungskraft bei einer Bearbeitungsstation limitiert sein kann. Diese Limitierung kann zur Folge haben, dass Bearbeitungsgegenstände nur unzureichend bearbeitet, beispielsweise verschlossen, werden können. Somit können bestimmte Qualitätsstandards nicht erreicht werden, was insbesondere nachteilig für Produkte in der pharmazeutischen Herstellung sein kann.

Aus der IT 201800005535 A1 sind eine Verarbeitungslinie zur automatisierten Behandlung von Gegenständen und ein damit durchführbares Verarbeitungsverfahren bekannt. Eine Verarbeitungslinie für die automatisierte Behandlung von Gegenständen umfasst eine Vielzahl von Arbeitsstationen, die entlang eines Transferweges verteilt sind, wobei jede so konfiguriert ist, dass sie einen vorbestimmten Arbeitszyklus durchführt. Ferner umfasst die Verarbeitungslinie Handhabungsvorrichtungen, die entlang des Transferweges arbeiten, um jeden Artikel sequentiell von einer Arbeitsstation zur nächsten Arbeitsstation entlang des Transferweges zu transferieren; wobei die Handhabungsvorrichtungen mindestens einen Linearmotor umfassen, der einen sich entlang des Transferweges erstreckenden Stator und eine Vielzahl von Stückhalte-Cursor aufweist, die gleitend entlang des Stators in Eingriff stehen und einzeln entlang des Transferweges bewegbar sind. Dabei weist jeder Stückhaltecursor mindestens ein erstes und ein zweites Gehäuse auf. Die Handhabungsvorrichtungen sind so konfiguriert, dass sie mindestens einen der Stückhalte-Cursor während der Ausführung des Bearbeitungszyklus in mindestens einer der Arbeitsstationen zwischen einem ersten Betriebszustand, in dem eines des mindestens einen ersten und zweiten Gehäuses betriebsmäßig mit einem in der Arbeitsstation arbeitenden Bearbeitungskopf ausgerichtet ist, und einem zweiten Betriebszustand, in dem das andere des mindestens einen ersten und zweiten Gehäuses betriebsmäßig mit dem Bearbeitungskopf ausgerichtet ist, verschieben. Die EP 3 172 819 B1 bildet die Basis vom Oberbegriff des Anspruchs 1 und beschreibt eine Vorrichtung zum Verschließen eines Behältnisses, umfassend zumindest eine Verschließstation zum Verschließen zumindest eines Behältnisses, zumindest eine Behältnisaufnahme zum Transport des Behältnisses relativ zur Verschließstation, wobei zumindest eine Antriebsfläche und zumindest ein auf der Antriebsfläche insbesondere magnetisch ankoppelbarer Mover vorgesehen sind, wobei der Mover auf der Antriebsfläche in zumindest zwei Freiheitsgraden verschiebbar und/oder drehbar angeordnet ist und die Behältnisaufnahme auf dem Mover angeordnet ist.

Die Erfindung betrifft ferner eine Verwendung einer Bearbeitungsvorrichtung.

Die insbesondere aufgrund der genannten Nachteile zugrunde liegende Aufgabe der Erfindung besteht darin, Bearbeitungsvorrichtungen zu verbessern.

Zur Lösung der genannten Aufgabe sind erfindungsgemäß die Merkmale des Anspruchs 1 vorgesehen. Insbesondere wird somit zur Lösung der genannten Aufgabe bei einer Bearbeitungsvorrichtung der eingangs beschriebenen Art erfindungsgemäß vorgeschlagen, dass die Bearbeitungsstation wenigstens eine Unterstützungseinheit hat, mit welcher die wenigstens eine Transporteinheit koppelbar ist und wobei die Unterstützungseinheit ein Widerlager gegen die Bearbeitungskraft bildet. Durch die Unterstützungseinheit kann die auf die Transporteinheit einwirkende Bearbeitungskraft vermindert werden, sodass die Langlebigkeit der Transporteinheit bzw. der Transportvorrichtung verbessert sein kann. Dadurch, dass die Unterstützungseinheit ein Widerlager gegen die Bearbeitungskraft ausbildet, kann die Bearbeitungskraft sehr hoch sein, wodurch eine Bearbeitung von Bearbeitungsgegenständen, insbesondere ein Verschließen pharmazeutischer Geräte, besonders gut durchgeführt werden kann. Insgesamt kann durch die Verwendung einer Unterstützungseinheit eine hohe Bandbreite an Bearbeitungskräften bei einer Bearbeitungsvorrichtung verwendet werden, sodass die Bearbeitungsvorrichtung viele unterschiedliche Bearbeitungsgegenstände, vorzugsweise in einem geschützten Raum, bearbeiten kann, was ökonomisch vorteilhaft ist. Derartige Bearbeitungsgegenstände können insbesondere sein: Vials, Spritzen oder Karpulen. Als Bearbeitungsgegenstände kommen auch Medizinprodukte, insbesondere medizintechnische Vorrichtungen wie Autoinjektoren, in Frage.

Ferner kann durch die erfindungsgemäße Bearbeitungsvorrichtung eine Bearbeitung des Bearbeitungsgegenstandes auch dann stattfinden, wenn sich die levitierende Transporteinheit vertikal oder schräg entlang einer wie hierin beschriebenen Statoranordnung bewegt, da durch die Unterstützungseinheit verhindert werden kann, dass die Transporteinheit durch die Bearbeitungskraft in Richtung Boden gedrückt wird. Insbesondere hierdurch kann eine Bearbeitungsvorrichtung verbessert werden.

Die Erfindung ermöglicht es, Bearbeitungskräfte auf die Transporteinheit einzubringen, die eine Haltekraft der Transporteinheit, gegeben beispielsweise durch einen Wirkmechanismus der Transportvorrichtung, übersteigen.

Unter koppelbar kann beispielsweise verstanden werden, dass die wenigstens eine Transporteinheit verfahrbar in die Unterstützungseinheit und/oder verbindbar mit der Unterstützungseinheit ausgebildet ist. Somit kann die wenigstens eine Transporteinheit optimal in die Unterstützungseinheit verfahren und/oder mit der Unterstützungseinheit lösbar verbunden werden.

Die wenigstens eine Transporteinheit kann auch bewegbar ausgebildet sein, sodass die Transporteinheit insbesondere durch die Unterstützungseinheit angehoben und/oder bewegt und/oder positioniert werden kann. Somit kann ein Transportweg der Transporteinheit vorteilhaft durch die Unterstützungseinheit erweitert werden.

Ein Vorteil der Erfindung ist, dass auf die Transportvorrichtung einzubringende Bearbeitungskräfte vermindert werden können. Dies kann helfen Schädigungen der Transporteinheiten oder der Transportvorrichtung insgesamt zu reduzieren oder zu vermeiden.

Beispielsweise kann durch das Widerlager verhindert werden, dass die magnetisch levitierte Transporteinheit während der Bearbeitung an die Statoranordnung gedrückt und die Bearbeitungskraft auf die Statoranordnung abgeleitet wird. Hierdurch kann verhindert werden, dass die Statoranordnung beschädigt oder zerstört wird. Dies ist insbesondere vorteilhaft für die Langlebigkeit und Produktionseffizienz der erfindungsgemäßen Bearbeitungsvorrichtung.

Die Unterstützungseinheit ist an eine Transporteinheit so angepasst, dass die Transporteinheit koppelbar, insbesondere verfahrbar und/oder verbindbar, zur Unterstützungseinheit ist und dass die Unterstützungseinheit ein Widerlager bilden kann. Es kann auch vorgesehen sein, dass die oder eine Unterstützungseinheit anpassbar an Transporteinheiten unterschiedlichen Bautyps ausgebildet ist. Alternativ oder zusätzlich kann die Unterstützungseinheit auch so ausgebildet sein, dass mehrere Transporteinheiten gleichzeitig an die Unterstützungseinheit angekoppelt, vorzugsweise verfahren bzw. verbunden, werden können. Somit kann vorteilhaft die gleiche Bearbeitungsstation Transporteinheiten unterschiedlichen Bautyps und/oder mehrere Transporteinheiten gleichzeitig bearbeiten, sodass eine Bearbeitungsvorrichtung noch flexibler eingesetzt werden kann.

Es kann auch vorgesehen sein, dass die Unterstützungseinheit bzw. das Widerlager durch wenigstens eine Transporteinheit, besonders bevorzugt durch mindestens zwei Transporteinheiten, ausgebildet wird. Somit kann vorteilhaft die Unterstützungseinheit ortsveränderbar ausgebildet werden. Insbesondere bei einer Verwendung mehrerer Transporteinheiten als Widerlager können hohe Haltekräfte erzeugt werden, die ein Vielfaches der Haltekraft einer einzelnen Transporteinheit erreichen können. Somit kann eine Position einer Transporteinheit während einer Bearbeitung fixiert werden.

Bei einer vorteilhaften Ausgestaltung kann vorgesehen sein, dass die Transporteinheit zumindest in der Unterstützungseinheit im Abstand zu einer elektromagnetischen Statoranordnung veränderbar eingerichtet ist, wobei vorzugsweise ein Volumen zwischen der Transporteinheit und der Statoranordnung vergrößerbar ist. Hierdurch kann, beispielsweise durch eine Hubbewegung, die Distanz beziehungsweise das (überdeckte) Volumen, zwischen Transporteinheit und Statoranordnung vor und/oder während der Bearbeitung des Bearbeitungsgegenstandes vergrößert werden. Somit kann vorteilhaft ein Ableiten der Bearbeitungskraft auf die Statoranordnung noch weiter vermindert oder verhindert werden. Ferner kann eine Kopplung der Transporteinheit an die Unterstützungseinheit kontrolliert durchgeführt werden, was besonders vorteilhaft sein kann.

Insbesondere kann vorgesehen sein, dass der Abstand durch Bestromung einer, beispielsweise der bereits erwähnten, Statoranordnung veränderbar eingerichtet ist. Somit kann die Abstandsveränderung der Transporteinheit durch die Transportvorrichtung und/oder die weitere Statoranordnung durchgeführt werden. Hierdurch kann die Unterstützungseinheit raumfest an der Bearbeitungsstation ausgebildet sein, wodurch die Unterstützungseinheit als Widerlager gegen besonders hohe Bearbeitungskräfte Verwendung finden kann.

Die weitere Statoranordnung kann insbesondere an der Bearbeitungsstation ausgebildet sein, welche insbesondere nicht mit der Transportvorrichtung verbunden ist. Die weitere Statoranordnung kann beispielsweise als eine zweite Statoranordnung einer ersten oder zweiten Transportvorrichtung ausgebildet sein, wobei die zweite Statoranordnung beispielsweise vertikal oder horizontal zu der ersten Statoranordnung der Transportvorrichtung ausgebildet sein kann.

Bei einer vorteilhaften Ausgestaltung kann vorgesehen sein, dass die Unterstützungseinheit ein aktives Bauteil ausbildet und die Transporteinheit zumindest teilweise anhebt und/oder unterstützt. Als aktives Bauteil kann die Unterstützungseinheit bewegt werden, um vorteilhaft die Transporteinheit abzuheben und/oder zu unterstützen, insbesondere wenn die Bearbeitungskraft auf die Transporteinheit abgeleitet wird. Beispielsweise kann durch die Unterstützungseinheit die Bearbeitungskraft abgefedert werden, sodass die Transporteinheit und insbesondere die Statoranordnung geringfügig und/oder überhaupt nicht belastet werden. Hierdurch kann eine Transportvorrichtung vorteilhaft geschützt werden.

Bei einer vorteilhaften Ausgestaltung kann vorgesehen sein, dass die Unterstützungseinheit raumfest zu der Bearbeitungsstation angeordnet ist. Dies ist insbesondere dann von Vorteil, wenn wie hierin beschrieben der Abstand der Transporteinheit zu einer elektromagnetischen Statoranordnung veränderbar durch Bestromung der hierin beschriebenen Statoranordnung eingerichtet ist. Bei einer vorteilhaften Ausgestaltung kann vorgesehen sein, dass die Unterstützungseinheit verfahrbar angeordnet ist. Hierdurch kann die Transporteinheit, nachdem sie in die Unterstützungseinheit verfahren ist, durch die Unterstützungseinheit relativ zu der Statoranordnung bewegt werden. Somit kann vorteilhaft der Abstand zwischen Transporteinheit und Statoranordnung vergrößert werden.

Vorzugsweise kann die Unterstützungseinheit relativ zu der Bearbeitungsstation verfahrbar angeordnet sein. Hierdurch kann die Unterstützungseinheit in ein Park- und/oder Bearbeitungsposition verfahren werden.

Insbesondere kann vorgesehen sein, dass ein Antrieb durch die Transportvorrichtung bewirkbar ist. Somit kann die Unterstützungseinheit durch die Transportvorrichtung relativ bewegbar ausgebildet sein. Beispielsweise kann die Unterstützungseinheit magnetisch levitierbar sein und durch die hierin beschriebene und/oder eine vorzugsweise an der Bearbeitungsstation angeordneten Statoranordnung angetrieben werden. Somit kann der Antrieb der Unterstützungseinheit vorteilhaft durch die hierin beschriebene Bestromung der Statoranordnung stattfinden. Vorteilhaft ist daran, dass eine Transportvorrichtung zur Bewegung der Transporteinheit und der Unterstützungseinheit verwendet werden kann, was konstruktive, prozesstechnische und finanzielle Vorteile haben kann.

Die Unterstützungseinheit kann vorzugsweise durch wenigstens zwei Transporteinheiten der oder einer weiteren Transportvorrichtung ausgebildet sein. Diese zwei Transporteinheiten sind bevorzugt magnetisch levitierbar ausgebildet, um an der oder einer weiteren Statoranordnung, insbesondere wie hierin beschrieben, vorteilhaft verfahren zu werden. Somit kann zusätzlich eine Relativbewegung von Unterstützungseinheit und der magnetisch levitierten Transporteinheit, die zur Aufnahme des Bearbeitungsgegenstandes eingerichtet ist, ausgeführt werden, insbesondere um vorteilhaft die Bearbeitungskraft der Bearbeitungsvorrichtung abzuleiten. Bei einer vorteilhaften Ausgestaltung kann vorgesehen sein, dass das Widerlager passend zu einem Gegen-Widerlager an der wenigstens einen Transporteinheit ausgebildet ist. Hierdurch kann eine Bearbeitungskraft optimal durch das passend zu dem Gegenwiderlager ausgebildeten Widerlager abgeleitet werden. Somit kann vorteilhaft eine formschlüssige und/oder kraftschlüssige und/oder über Magnetkräfte bewirkte Verbindung zwischen Transporteinheit und Unterstützungseinheit hergestellt werden.

Bei einer vorteilhaften Ausgestaltung kann vorgesehen sein, dass das Widerlager so ausgebildet ist, dass die abgestützte Transporteinheit auch bei deaktivierter Transportvorrichtung von der Statoranordnung beabstandet angeordnet ist. Insbesondere kann dies vorgesehen sein, wenn, wie zuvor beschrieben, die Transporteinheit zumindest in der Unterstützungseinheit im Abstand zu der elektromagnetischen Statoranordnung veränderbar eingerichtet ist. Somit kann vorteilhaft die Statoranordnung während einer Bearbeitung ausgeschalten und Energie gespart werden. Ferner kann von Vorteil sein, dass eine auf der Transporteinheit befindliche Sensorik, welche beispielsweise auf elektromagnetische Felder sensibel ist, durch die Beabstandung geschützt ist. Somit kann die sensible Sensorik bei der Bearbeitungsvorrichtung zu Bearbeitung insbesondere des Bearbeitungsgegenstands zum Einsatz kommen.

Bei einer vorteilhaften Ausgestaltung kann vorgesehen sein, dass das Widerlager so angeordnet ist, dass die wenigstens eine Transporteinheit innerhalb ihres Hubweges das Widerlager kontaktiert. Somit kann vorteilhaft das Widerlager bzw. die Unterstützungseinheit durch den Antrieb der Transportvorrichtung relativ zu der Bearbeitungsstation verfahren werden.

Bei einer vorteilhaften Ausgestaltung kann vorgesehen sein, dass das Widerlager parallel und/oder transversal, insbesondere senkrecht, zu der Statoranordnung angeordnet ist. Somit kann die Transporteinheit einfach die Unterstützungseinheit angekoppelt beziehungsweise angefahren und/oder verbunden werden, um einen Kontakt in einem wie nachfolgend beschriebenen Kontaktbereich zwischen Widerlager und Gegen-widerlager herstellen. Beispielsweise kann ein parallel angeordnetes Widerlager ein Einfahren der Transporteinheit begünstigen. Ein transversal, insbesondere senkrecht angeordnetes Widerlager ist besonders vorteilhaft, wenn die Transporteinheit auf einer vertikalen Statoranordnung verfahren und zur Bearbeitung an der Bearbeitungsvorrichtung gekoppelt wird, da beispielsweise das Widerlager insbesondere auch als Blockierung eines Freiheitsgrades verwendet werden kann.

Insbesondere kann vorgesehen sein, dass das Widerlager eine Ausdehnung aufweist, die wenigstens um ein 1,2-faches länger ist als ein Kontaktbereich zwischen Widerlager und Gegen-Widerlager. Somit kann sichergestellt sein, dass die Transporteinheit vollständig im Bereich ihres Gegenwiderlagers die Unterstützungseinheit kontaktiert. Somit kann eine gleichmäßige Ableitung der Bearbeitungskraft sichergestellt werden, was für die Sicherheit der Transporteinheit und des Bearbeitungsgegenstandes von Vorteil ist.

Alternativ kann insbesondere vorgesehen sein, dass das Widerlager eine Ausdehnung aufweist, die höchstens um ein 1,2-faches länger ist als ein Kontaktbereich zwischen Widerlager und Gegen-Widerlager. Somit kann die wenigstens eine Transporteinheit präzise an der Unterstützungseinheit ausgerichtet beziehungsweise angekoppelt werden.

Bei einer vorteilhaften Ausgestaltung kann vorgesehen sein, dass die Bearbeitungsstation zum Einbringen einer Zugkraft und/ oder einer Druckkraft und /oder eines Drehmoments als Torsionskraft als die Bearbeitungskraft eingerichtet ist. Hierdurch kann eine Bearbeitungsvorrichtung variabel Bearbeitungsgegenstände bearbeiten, wodurch Prozesse besonders facettenreich ausgestaltet werden können.

Bei einer vorteilhaften Ausgestaltung kann vorgesehen sein, dass die Bearbeitungsstation eine Presse aufweist, mit welcher die Bearbeitungskraft einbringbar ist. Hierdurch kann eine Bearbeitungsgegenstand insbesondere durch eine geradlinige Relativbewegung umgeformt, verpresst und/oder verschlossen werden.

Bei einer vorteilhaften Ausgestaltung kann vorgesehen sein, dass die Bearbeitungsstation einen Kraftmesssensor hat. Hierdurch kann vorteilhaft eine Haltekraft und/oder die oder eine Bearbeitungskraft gemessen werden. Somit kann optimal eine Bearbeitungskraft an eine Haltekraft angepasst werden. Als Haltekraft ist beispielsweise die Kraft der Unterstützungseinheit gemeint, durch die die Transporteinheit insbesondere während der Bearbeitung des Bearbeitungsgegenstands in Position gehalten wird.

Bei einer vorteilhaften Ausgestaltung kann vorgesehen sein, dass die Bearbeitungskraft grösser als die Haltekraft der Transporteinheit ist. Somit kann, insbesondere dann, wenn die Transporteinheit zumindest in der Unterstützungseinheit im Abstand zu der hierin beschriebenen elektromagnetischen Statoranordnung angeordnet ist, eine geringe Haltekraft verwendet werden. Somit kann vorteilhaft auf ein aktives Greifen der Transporteinheit zumindest während der Bearbeitung verzichtet werden.

Bei einer vorteilhaften Ausgestaltung kann vorgesehen sein, dass die Unterstützungseinheit zur Blockierung wenigstens zweier Freiheitsgrade der Transporteinheit eingerichtet ist. Dies kann beispielsweise der Fall sein, wenn die Transporteinheit in eine als zweizinkige Gabel ausgebildete Unterstützungseinheit gefahren und gehalten wird. Somit kann verhindert werden, dass die Transporteinheit während der Bearbeitung ungewünschte Bewegungen (in Richtung der blockierten Freiheitsgrade) ausführt. Somit kann eine Bearbeitung von Bearbeitungsgegenständen insbesondere auch bei hohen Bearbeitungskräften robust sein.

Bei einer vorteilhaften Ausgestaltung kann vorgesehen sein, dass das Widerlager aktivierbar ist. Somit kann das Widerlager durch eine Aktivierung vorteilhaft eine Kontaktierung mit dem Gegen-widerlager der Transporteinheit aufnehmen. Hierdurch kann vorteilhaft eine unerwünschte Kontaktierung zwischen der oder einer Transporteinheit und der Unterstützungseinheit vermieden werden. Eine Aktivierung kann beispielsweise auch über Magnetkräfte von Permanent- und /oder Elektromagneten erfolgen.

Insbesondere kann vorgesehen sein, dass das Widerlager durch eine, beispielsweise die bereits erwähnte, andockende Transporteinheit aktiviert wird. Somit kann das Widerlager vorteilhaft durch eine andockende Transporteinheit, welche vorzugsweise einen Bearbeitungsgegenstand trägt, aktiviert werden. Somit können unerwünschte Aktivierungen verhindert werden.

Bei einer vorteilhaften Ausgestaltung kann vorgesehen sein, dass das Widerlager wenigstens zwei Kontaktflächen mit dem Gegenwiderlager ausbildet. Es können alternativ auch mehrere Kontaktflächen ausgebildet sein. Beispielsweise kann die Unterstützungseinheit als Gabel ausgebildet sein, wobei jede Zinke eine Kontaktfläche mit dem Gegen-widerlager ausbildet. Durch die wenigstens zwei Kontaktflächen kann eine Kraftableitung der Bearbeitungskraft noch gleichmäßiger und schonender für die Transportvorrichtung ausgebildet sein.

Bei einer vorteilhaften Ausgestaltung kann vorgesehen sein, dass die Unterstützungseinheit zumindest teilweise von der Statoranordnung umgeben ist. Dies ist insbesondere dann von Vorteil, wenn die Bearbeitungsstation selbst eine Statoranordnung aufweist, in welche die Transporteinheit gefahren werden kann. Hierdurch kann die Bearbeitungsstation als Modul mit der Transporteinheit funktionell verbunden werden, wodurch eine Bearbeitungsvorrichtung flexibel und nach Kundenwünschen ausgebildet werden kann.

Bei einer vorteilhaften Ausgestaltung kann vorgesehen sein, dass wenigstens ein Antriebssegment der abgestützten Transporteinheit zu einer Außenwand der Unterstützungseinheit positioniert ist. Eine Außenwand kann insbesondere eine Wand einer Unterstützungseinheit sein, welche die Transporteinheit in einer Längsausstreckung nach Außen abtrennt, sodass die abgestützte Transporteinheit vorteilhaft nicht aus der Unterstützungseinheit fällt, wenn diese eine Hubbewegung durchführt.

Bei einer vorteilhaften Ausgestaltung kann vorgesehen sein, dass die Bearbeitungsstation eingerichtet ist, den Bearbeitungsgegenstand und/oder einen Inhalt des Bearbeitungsgegenstands - beispielsweise der bereits erwähnten Krafteinwirkung vorgelagert und/oder nachgelagert - ohne Krafteinwirkung zu prozessieren. Hierdurch kann ohne Krafteinwirkung der Bearbeitungsstation der Bearbeitungsgegenstand und/oder ein Inhalt des Bearbeitungsgegenstands prozessiert werden. Somit kann in einer bevorzugten Ausführungsform beispielsweise ein Behälter befüllt werden. Die eingangs erwähnte Bearbeitungskraft kann beispielsweise dazu dienen, vor der Befüllung einen Verschluss zu öffnen und/oder nach der Befüllung einen Verschluss zu schließen.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe bei einer Verwendung der eingangs beschriebenen Art erfindungsgemäß vorgeschlagen, dass eine wie zuvor beanspruchten Bearbeitungsvorrichtung zum Verschließen von pharmazeutischen Geräten und oder Produkten und/oder zum Montieren von Medizinprodukten verwendet wird. Durch die Verwendung einer erfindungsgemäßen Bearbeitungsvorrichtung können pharmazeutische Geräte und/oder Produkte dicht verschlossen werden, da eine hohe Bearbeitungskraft aufgewendet werden kann. Das Verschließen kann auch steril ablaufen, da die pharmazeutischen Gefäße durch die Transportvorrichtung auf einer magnetisch levitierten Transporteinheit bewegt werden. Dies ist auch vorteilhaft beim Montieren von Medizinprodukten, insbesondere also medizintechnische Vorrichtungen wie Autoinjektoren. Somit sind die pharmazeutischen Geräte und/oder die Medizinprodukte vor Abrieb und Kontamination geschützt. Ebenso kann ein Kontaminationsrisiko dadurch vermindert werden, dass die Unterstützungseinheit mitsamt Transporteinheit während des Verschließens der pharmazeutischen Geräte und/oder Produkte ein Abstand zu der hierin beschriebenen elektromagnetischen Statoranordnung vergrößert werden kann. Somit kann vorteilhaft das pharmazeutische Gerät und/oder das Medizinprodukt bodenfern verschlossen werden.

Es kann auch vorgesehen sein, dass mehrere Transporteinheiten als Widerlager fungieren können, da mehrere Transporteinheiten mehr Kraft aufnehmen können, so dass eine statische Abstützung des Widerlagers nicht erforderlich ist.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele, solange der resultierende Gegenstand zum Schutzumfang gehört, der von den Ansprüchen definiert ist.

Es zeigen:
- Figur 1: eine erfindungsgemäße Bearbeitungsvorrichtung,
- Figur 2: eine erfindungsgemäße Bearbeitungsvorrichtung mit einer in einer Unterstützungseinheit befindlichen und von einer elektromagnetischen Statoranordnung beabstandeten Transporteinheit,
- Figuren 3/4: zwei alternative, erfindungsgemäße Bearbeitungsvorrichtungen, deren Transporteinheiten vertikal verfahrbar sind,
- Figuren 5/6: eine alternative, erfindungsgemäße Bearbeitungsvorrichtung in Seitenansicht (Figur 5) und Draufsicht (Figur 6),
- Figur 7: eine alternative, erfindungsgemäße Bearbeitungsvorrichtung mit einer Unterstützungseinheit, deren Widerlager eine Bearbeitungskraft in jede Richtung, außer in Durchfahrtsrichtung der Transporteinheit, aufnehmen können,
- Figur 8/9: zwei alternative, erfindungsgemäße Bearbeitungsvorrichtungen, deren Unterstützungseinheit ein aktives Bauteil ausbilden,
- Figuren 10/11: eine alternative, erfindungsgemäße Bearbeitungsvorrichtung mit aktivem Bauteil ohne (Figur 10) und in (Figur 11) Kontaktierung mit der Transporteinheit,
- Figuren 12/13: zwei alternative, erfindungsgemäße Bearbeitungsvorrichtungen zur Bearbeitung von zwei (Figur 12) und vier (Figur 13) Spritzen,
- Figur 14: eine alternative, erfindungsgemäße Bearbeitungsvorrichtung mit einer teilweise von einer Statoranordnung umgebenen Bearbeitungsstation.

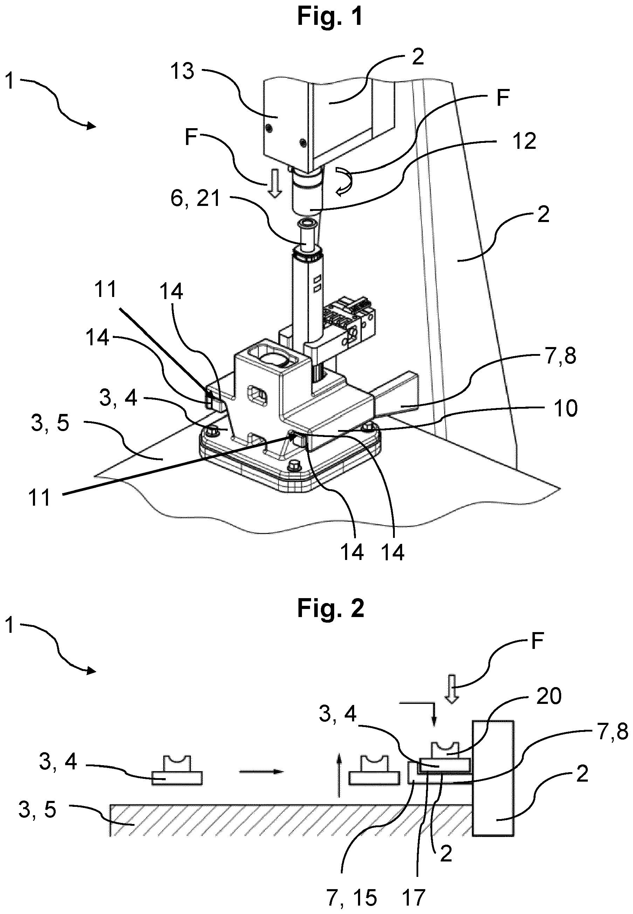

Figur 1 zeigt eine Bearbeitungsvorrichtung 1 mit wenigstens einer Bearbeitungsstation 2 und wenigstens einer Transportvorrichtung 3, wobei die Transportvorrichtung 3 zu einem Transport wenigstens einer magnetisch levitierten Transporteinheit 4 zur und/oder von der wenigstens einen Bearbeitungsstation 2 eingerichtet ist, wobei die Bearbeitungsstation 2 zum Einbringen einer Bearbeitungskraft F auf einen Bearbeitungsgegenstand 6 eingerichtet.

Mit einer nicht dargestellten Bearbeitungsvorrichtung 1 werden auch Kräfte seitlich auf einen Bearbeitungsgegenstand 6 eingebracht.

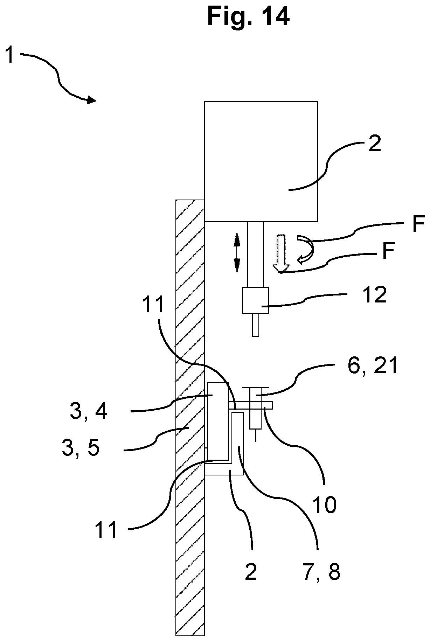

Der Bearbeitungsgegenstand 6 ist in den Figuren 1, 6, und 12 bis 14 dargestellt, jedoch der besseren Übersicht halber aus den anderen Figuren weggelassen. Die Bearbeitungsgegenstände 6 in diesen anderen Figuren befinden sich jedoch auf der Gegenstandsaufnahme 20. Ein Bearbeitungsgegenstand 6 kann ein pharmazeutisches Gerät 21, insbesondere eine Spritze oder ein Medizinprodukt wie ein Autoinjektor oder ein sonstiges, aus mehreren Teilen und Krafteinwirkung zusammengesetztes Medizinprodukt sein.

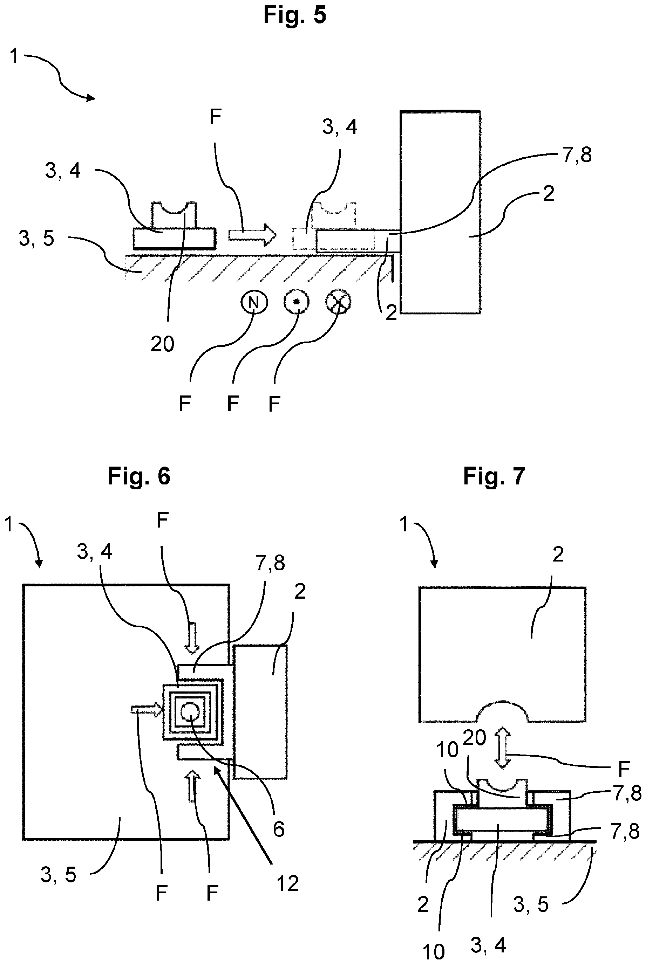

Die Bearbeitungsstation 2 kann zum Einbringen einer Zugkraft und/oder einer Druckkraft und/oder eines Drehmoments und/oder einer Torsionskraft als die Bearbeitungskraft F eingerichtet sein, wie es beispielsweise in den Figuren 1 bis 14 gezeigt ist. Dabei stellt ein gerader Pfeil eine Zug- und/oder Druckkraft dar und ein gebogener, nach unten gerichteter Pfeil einen Drehmoment (Richtung der Drehachse mit Richtungssinn gemäß Drehsinn). Es können auch weitere Bearbeitungskräfte vorgesehen sein, welche durch die Bearbeitungsstation 2 eingebracht werden können. Insbesondere kann vorgesehen sein, dass unterschiedliche Bearbeitungskräfte, beispielsweise die zuvor genannten Zug- und Druckkräfte, auch elektrischem und/oder magnetischem Ursprungs (dargestellt mit einem in einem Kreis befindlichen "N"), wie es beispielsweise in der in Figur 5 gezeigten Ausführungsform der Fall ist, durch die Bearbeitungsstation 2 eingebracht werden. Die in den Figuren 1 und 12 bis 14 gezeigten Ausführungsformen einer Bearbeitungsstation 2 bilden eine Presse 12 aus, durch die die Bearbeitungskraft F einbringbar ist.

In nicht gezeigten Ausführungsformen sind Bearbeitungsstationen 2 zumindest wie die Ausführungsformen in den Figuren 1 bis 14 ausgebildet und ferner dazu eingerichtet, den Bearbeitungsgegenstand 6 und/oder einen Inhalt des Bearbeitungsgegenstands 6 ohne Krafteinwirkung zu prozessieren. Beispielsweise kann ein als Behälter ausgebildeter Bearbeitungsgegenstand 6 durch die Bearbeitungsstation 2 befüllt werden. Die levitierte Transporteinheit 4 ist mit der Statoranordnung 5 magnetisch gekoppelt und in wenigstens zwei Freiheitsgraden bewegbar. Dies ist in allen Ausführungsformen der Fall. Hierdurch kann die Transporteinheit 4 flexibel bewegbar sein, wodurch eine Gesamtausgestaltung der Bearbeitungsvorrichtung 1 flexibel und den Kundenwünschen entsprechend sein kann.

Die in sämtlichen Figuren gezeigten Ausführungsformen sind dadurch gekennzeichnet, dass die Bearbeitungsstation 2 wenigstens eine Unterstützungseinheit 7 hat, in welche die wenigstens eine Transporteinheit 4 verfahrbar ist und wobei die Unterstützungseinheit 7 ein Widerlager 8 gegen die Bearbeitungskraft F bildet. Somit kann das Widerlager 8 vorteilhaft die Bearbeitungskraft F auf die Transporteinheit 4 so entgegenwirken, dass die Transportvorrichtung 3 nicht beschädigt oder gar zerstört wird. Somit kann eine Bearbeitungsvorrichtung 1 besonders verbessert sein.

Das Widerlager 8 der Unterstützungseinheiten 7 ist so angeordnet, dass die abgestützte Transporteinheit 4 auch bei deaktivierter Transportvorrichtung 3 von der Statoranordnung 5 beabstandet angeordnet ist.

Die Unterstützungseinheit 7 kann in verschiedenster Weise ausgeführt sein. Es kann, wie insbesondere in den Figuren 1, 2, 3, 7 und 9 gezeigt, vorgesehen sein, dass die Unterstützungseinheit 7 so eingerichtet ist, dass die Transporteinheit 4 zumindest in der Unterstützungseinheit 7 im Abstand zu einer elektromagnetischen Statoranordnung 5 veränderbar eingerichtet ist. Die Änderung des Abstandes der Transporteinheit 4 zur Statoranordnung 5 kann dadurch realisiert sein, dass die Unterstützungseinheit 7 ein aktives Bauteil 9 ausbildet und die Transporteinheit 4 abhebt und/oder unterstützt.

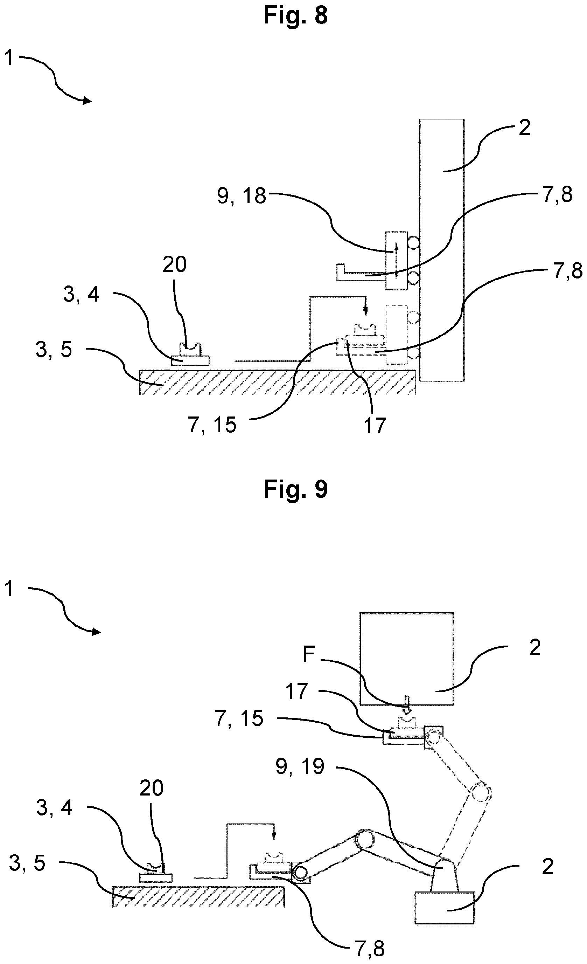

Das in Figur 8 dargestellte aktive Bauteil 9 ist als ein verfahrbarer Wagen 18 ausgebildet, wobei der verfahrbare Wagen 18 verfahrbar an der Bearbeitungsstation 2 ausgebildet ist und die Transporteinheit 4 durch Verfahren abhebt. Die Unterstützungseinheit 7, 8 ist an dem aktiven Bauteil 9, 18 ausgebildet. Dabei ist der Antrieb des aktiven Bauteils 9, 18 durch Bestromung der Transporteinheit 4 der Transportvorrichtung 3 bewirkbar.

Das in Figur 9 dargestellte aktive Bauteil 9 ist als Heberoboter 19 ausgebildet, welcher die Transporteinheit 4 anheben und zur Bearbeitungsstation 2 bewegen kann.

In den Ausführungsformen der Figuren 8 und 9 ist zu erkennen, dass das Widerlager 8 so angeordnet ist, dass die eine Transporteinheit 4 innerhalb ihres Hubweges das Widerlager 8 kontaktiert. Dabei ist, wie auch in anderen Figuren, die Bewegung dadurch illustriert, dass ein mit durchgehend gezeichneten Strichen dargestelltes Element von einer Ausgangsposition zu einer weiteren Position (gestrichelte Darstellung des Elements) bewegt wird.

Ein Anheben der Transporteinheit 4 kann auch durch Bestromung der Statoranordnung 5 realisiert werden, wie es insbesondere die Ausführungsformen der Figuren 1 bis 3 realisieren.

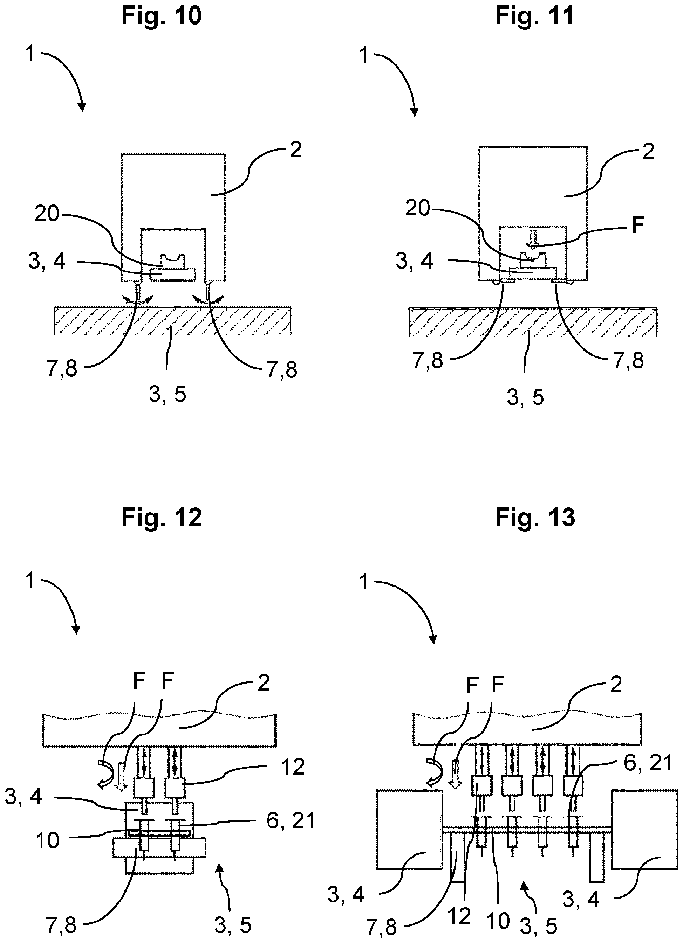

Die in den Figuren 10 und 11 gezeigte Ausführungsform zeigt eine bewegliche Unterstützungseinheit 7, 8, welche die Transporteinheit 4 unterstützt, sobald die Transporteinheit 4 in die Kavität der Bearbeitungsstation 2 gefahren ist. Dabei ist die Unterstützungseinheit 7, 8 klappbar ausgebildet. Wie in Figur 11 zu erkennen ist, blockiert die Unterstützungseinheit 7, 8 die Transporteinheit 4 in drei Freiheitsgraden, insbesondere nachdem das Widerlager 8 durch die andockende Transporteinheit 4 aktiviert wurde. Somit ist die Transporteinheit 4 während der Bearbeitung durch die Bearbeitungsstation 2 gesichert und kann nicht aus der Bearbeitungsstation 2 fallen. Eine ähnliche Sicherung, wobei die Transporteinheit 4 durch die Bearbeitungsstation 2 entgegen ihrer Einfahrtsrichtung gesichert ist, ist in den Ausführungsformen der Figuren 2, 3, 8 und 9 realisiert.

In den Ausführungsformen der Figuren 1 bis 7 und 12 bis 14 ist die Unterstützungseinheit 7, 8 raumfest zu der Bearbeitungsstation 2 angeordnet.

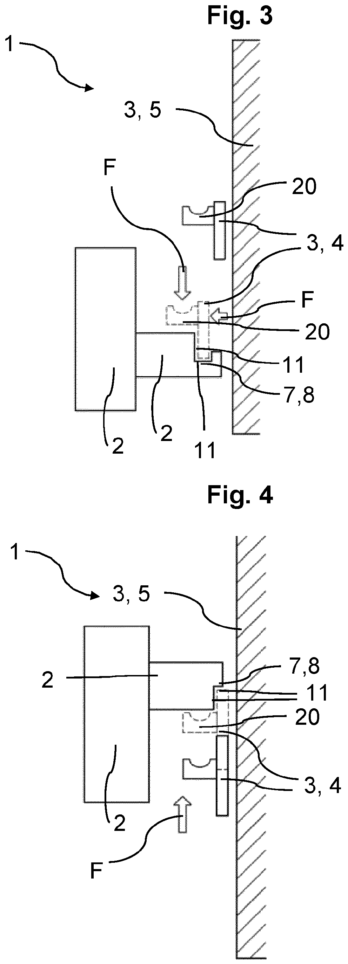

Das Widerlager 8 aller gezeigter Ausführungsformen ist passend zu einem Gegen-Widerlager 10 an der wenigstens einen Transporteinheit 4 ausgebildet, insbesondere zur Herstellung einer formschlüssigen (insbesondere Figuren 1 und 7) und/oder kraftschlüssigen (insbesondere Figur 7) und/oder über Magnetkräfte (Figuren 3 und 4) bewirkten Verbindung.

In Figur 7 ist ferner dargestellt, dass die Widerlager 8 der Bearbeitungsstation 2 zu einem nicht vollständig geschlossenen Tunnel ausgebildet sind, welcher an seiner Unterseite und Oberseite einer Zugkraft (Oberseite) oder Druckkraft (Unterseite) entgegenwirken kann. Die Widerlager 8 bei dieser Ausführungsform sind so ausgebildet, dass die Widerlager 8 eine Bearbeitungskraft F in jede Richtung, mit Ausnahme einer Durchfahrtsrichtung der Transporteinheit 4, aufnehmen können.

In einer nicht gezeigten Ausführungsform ist die in Figur 7 gezeigte Ausführungsform nicht als Tunnel, sondern als Garage ausgebildet, sodass die Transporteinheit 4 durch lediglich eine Öffnung der Bearbeitungsstation 2 ein- und ausfahren kann.

In den Figuren 1, 2 und 5 bis 11 ist das Widerlager 8 parallel zu der Statoranordnung 5 angeordnet und weist eine Ausdehnung auf, die wenigstens um ein 1,2-faches länger ist als ein Kontaktbereich 11 zwischen Widerlager 8 und Gegen-Widerlager 10 (siehe insbesondere Figur 1). Somit kann die Transporteinheit 4 sicher auf der Unterstützungseinheit 7, 8 andocken und während der Bearbeitung unterstützt werden.

Das Widerlager 8 kann auch nicht parallel, insbesondere senkrecht, zu der Statoranordnung 5 angeordnet, sein, wie es beispielsweise in den Ausführungsformen der Figuren 3, 4 und 12 bis 14 zu sehen ist. Eine nicht parallele Anordnung ist insbesondere dann vorteilhaft, wenn die Transporteinheit 4 an einer vertikalen Wand verfahrbar ist und an der Bearbeitungsstation 2 andockt.

Die Ausführungsform 1 zeigt einen Kraftmesssensor 13 der Bearbeitungsstation 2, welcher vorteilhaft insbesondere die Bearbeitungskraft F messen kann. Der Kraftmesssensor 13 ist, obzwar nicht dargestellt, auch in den Bearbeitungsstationen 2 der weiteren Ausführungsformen vorhanden.

Der Kraftmesssensor 13 kann auch eine Haltekraft messen. Dies ist insbesondere dann von Vorteil, wenn (wie in bei den gezeigten Ausführungsformen), die Bearbeitungskraft F grösser als eine Haltekraft der Transporteinheit 4 ist. Somit kann eine Bearbeitung durch die Bearbeitungsvorrichtung 1 überwacht und optimal ausgeführt werden.

Das Widerlager 8 der gezeigten Ausführungsformen hat auch wenigstens zwei Kontaktflächen 11 mit dem Gegenwiderlager 10 ausgebildet, sodass die Transporteinheit 4 an wenigstens zwei Seiten die Unterstützungseinheit 7 kontaktiert. Hierdurch kann die Transporteinheit 4 besonders gesichert sein, insbesondere während der Bearbeitung. Ferner kann dadurch das wenigstens ein Antriebssegment 17, beispielsweise ein Elektro- und/oder Dauermagnet, der abgestützten Transporteinheit 4 zu einer Außenwand 15 der Unterstützungseinheit 7 positioniert sein, so wie es in den Figuren 2, 8 und 9 beispielhaft dargestellt ist.

Insbesondere zur Platzeinsparung kann die Unterstützungseinheit 7 zumindest teilweise von der Statoranordnung 5 umgeben sein. In den Ausführungsformen in den Figuren 12 bis 14 ist die Unterstützungseinheit 7, 8 vollständig von der Statoranordnung 5 umgeben. Hierdurch kann die Transporteinheit 4 die Unterstützungseinheit 7, 8 umfahren und optimal daran andocken.

Die gezeigten Ausführungsformen werden insbesondere zum Verschließen pharmazeutischer Geräte 6, 21 verwendet. Beispielsweise können pharmazeutische Geräte 6, 21 Spritzen sein, wie sie insbesondere in den Figuren 12 bis 14 dargestellt sind. Ferner können pharmazeutische Produkte und/oder Medizinprodukten durch die Ausführungsformen bearbeitet werden.

Die Erfindung schlägt allgemein eine Bearbeitungsvorrichtung 1 mit wenigstens einer Bearbeitungsstation 2 und wenigstens einer Transportvorrichtung 3 vor, wobei die Transportvorrichtung 3 zu einem Transport wenigstens einer magnetisch levitierten Transporteinheit 4, die zur Aufnahme eines Bearbeitungsgegenstands 6 eingerichtet ist, zur und/oder von der wenigstens einen Bearbeitungsstation 2 eingerichtet ist, wobei die Bearbeitungsstation 2 zum Einbringen einer Bearbeitungskraft F auf einen Bearbeitungsgegenstand 6 eingerichtet ist und wobei die Bearbeitungsstation 2 wenigstens eine Unterstützungseinheit 7 hat, mit welcher die wenigstens eine Transporteinheit 4 koppelbar ist und wobei die Unterstützungseinheit 7 ein Widerlager 8 gegen die Bearbeitungskraft F bildet.

### Bezugszeichenliste

- 1: Bearbeitungsvorrichtung
- 2: Bearbeitungsstation
- 3: Transportvorrichtung
- 4: Transporteinheit
- 5: elektromagnetische Statoranordnung
- 6: Bearbeitungsgegenstand
- 7: Unterstützungseinheit
- 8: Widerlager
- 9: aktives Bauteil
- 10: Gegen-Widerlager
- 11: Kontaktbereich zwischen 8 und 10
- 12: Presse
- 13: Kraftmesssensor
- 14: Kontaktfläche
- 15: Außenwand von 7
- 17: Antriebssegment von 4
- 18: Wagen
- 19: Heberoboter
- 20: Gegenstandsaufnahme
- 21: pharmazeutisches Gerät

- F: Bearbeitungskraft

## Patentansprüche

1. Bearbeitungsvorrichtung (1) mit wenigstens einer Bearbeitungsstation (2) und wenigstens einer Transportvorrichtung (3), wobei die Transportvorrichtung (3) zu einem Transport wenigstens einer magnetisch levitierten Transporteinheit (4), die zur Aufnahme eines Bearbeitungsgegenstands (6) eingerichtet ist, zur und/oder von der wenigstens einen Bearbeitungsstation (2) eingerichtet ist, wobei die Bearbeitungsstation (2) zum Einbringen einer Bearbeitungskraft (F) auf den Bearbeitungsgegenstand (6) eingerichtet ist, **dadurch gekennzeichnet, dass** die Bearbeitungsstation (2) wenigstens eine Unterstützungseinheit (7) hat, mit welcher die wenigstens eine Transporteinheit (4) koppelbar ist und wobei die Unterstützungseinheit (7) ein Widerlager (8) gegen die Bearbeitungskraft (F) bildet.

2. Bearbeitungsvorrichtung (1) nach Anspruch 1, **dadurch gekennzeichnet, dass** die Transporteinheit (4) zumindest in der Unterstützungseinheit (7) im Abstand zu einer elektromagnetischen Statoranordnung (5) veränderbar eingerichtet ist, wobei vorzugsweise ein Volumen zwischen Transporteinheit (4) und Statoranordnung (5) vergrößerbar ist, insbesondere wobei der veränderbare Abstand durch Bestromung der und/oder einer weiteren Statoranordnung (5) eingerichtet ist.

3. Bearbeitungsvorrichtung (1) nach einem der vorangehenden Ansprüche, **dadurch gekennzeichnet, dass** die Unterstützungseinheit (7) ein aktives Bauteil (9) ausbildet und die Transporteinheit (4) abhebt und/oder unterstützt und/oder dass die Unterstützungseinheit (7) raumfest zu der Bearbeitungsstation (2) angeordnet ist.

4. Bearbeitungsvorrichtung (1) nach einem der vorangehenden Ansprüche, **dadurch gekennzeichnet, dass** die Unterstützungseinheit (7), vorzugsweise relativ zu der Bearbeitungsstation (2), verfahrbar angeordnet ist, insbesondere wobei ein Antrieb durch die Transportvorrichtung (3) bewirkbar ist, insbesondere wobei die Unterstützungseinheit (7) durch wenigstens zwei vorzugsweise gekoppelte Transporteinheiten (4) der oder einer weiteren Transportvorrichtung (3) ausgebildet ist.

5. Bearbeitungsvorrichtung (1) nach einem der vorangehenden Ansprüche, **dadurch gekennzeichnet, dass** das Widerlager (8) passend zu einem Gegen-Widerlager (10) an der wenigstens einen Transporteinheit (4) ausgebildet ist, insbesondere zur Herstellung einer formschlüssigen und/oder kraftschlüssigen und/oder über Magnetkräfte bewirkten Verbindung.

6. Bearbeitungsvorrichtung (1) nach einem der vorangehenden Ansprüche, **dadurch gekennzeichnet, dass** das Widerlager (8) so ausgebildet ist, dass die abgestützte Transporteinheit (4) auch bei deaktivierter Transportvorrichtung (3) von der Statoranordnung (5) beabstandet angeordnet ist.

7. Bearbeitungsvorrichtung (1) nach einem der vorangehenden Ansprüche, **dadurch gekennzeichnet, dass** das Widerlager (8) so angeordnet ist, dass die wenigstens eine Transporteinheit (4) innerhalb ihres Hubweges das Widerlager (8) kontaktiert.

8. Bearbeitungsvorrichtung (1) nach einem der vorangehenden Ansprüche, **dadurch gekennzeichnet, dass** das Widerlager (8) parallel und/oder transversal, insbesondere senkrecht, zu der Statoranordnung (5) angeordnet ist und/oder dass das Widerlager (8) eine Ausdehnung aufweist, die wenigstens oder höchstens um ein 1,2-faches länger ist als ein Kontaktbereich (11) zwischen Widerlager (8) und Gegen-Widerlager (10).

9. Bearbeitungsvorrichtung (1) nach einem der vorangehenden Ansprüche, **dadurch gekennzeichnet, dass** die Bearbeitungsstation (2) zum Einbringen einer Zugkraft und/ oder einer Druckkraft und /oder eines Drehmoments und/oder einer Torsionskraft als die Bearbeitungskraft (F) eingerichtet ist.

10. Bearbeitungsvorrichtung (1) nach einem der vorangehenden Ansprüche, **dadurch gekennzeichnet, dass** die Bearbeitungsstation (2) eine Presse (12) aufweist, mit welcher die Bearbeitungskraft (F) einbringbar ist, und/oder dass die Bearbeitungsstation (2) einen Kraftmesssensor (13) hat.

11. Bearbeitungsvorrichtung (1) nach einem der vorangehenden Ansprüche, **dadurch gekennzeichnet, dass** die Bearbeitungskraft (F) grösser als eine Haltekraft der Transporteinheit (4) ist und/oder dass die Unterstützungseinheit (7) zur Blockierung wenigstens zweier Freiheitsgrade der Transporteinheit (4) eingerichtet ist.

12. Bearbeitungsvorrichtung (1) nach einem der vorangehenden Ansprüche, **dadurch gekennzeichnet, dass** das Widerlager (8) aktivierbar, insbesondere durch die oder eine andockende Transporteinheit (4), ist und/oder dass das Widerlager (8) wenigstens zwei Kontaktflächen (14) mit dem Gegenwiderlager (10) ausbildet.

13. Bearbeitungsvorrichtung (1) nach einem der vorangehenden Ansprüche, **dadurch gekennzeichnet, dass** die Unterstützungseinheit (7) zumindest teilweise von der Statoranordnung (5) umgeben ist und/oder dass wenigstens ein Antriebssegment (17) der abgestützten Transporteinheit (4) zu einer Außenwand (15) der Unterstützungseinheit (7) positioniert ist.

14. Bearbeitungsvorrichtung (1) nach einem der vorangehenden Ansprüche, **dadurch gekennzeichnet, dass** die Bearbeitungsstation (2) eingerichtet ist, den Bearbeitungsgegenstand (6) und/oder einen Inhalt des Bearbeitungsgegenstands (6) ohne Krafteinwirkung zu prozessieren.

15. Verwendung einer wie zuvor beanspruchten Bearbeitungsvorrichtung (1) zum Verschließen von pharmazeutischen Geräten (21) und/oder zum Montieren von Medizinprodukten.

## Claims

1. Processing device (1) having at least one processing station (2) and at least one transport device (3), wherein the transport device (3) is set up to transport at least one magnetically levitated transport unit (4), which is set up to accommodate a processing object (6), to and/or from the at least one processing station (2), wherein the processing station (2) is arranged to apply a processing force (F) to the processing object (6), **characterized in that** the processing station (2) has at least one support unit (7) to which the at least one transport unit (4) can be coupled and wherein the support unit (7) forms an abutment (8) against the processing force (F).

2. Processing device (1) according to claim 1, **characterized in that** the transport unit (4) is set up to be variable at least in the support unit (7) at a distance from an electromagnetic stator arrangement (5), wherein preferably a volume between transport unit (4) and stator arrangement (5) is able to be increased, in particular wherein the variable distance is set up by energizing the and/or a further stator arrangement (5).

3. Processing device (1) according to one of the preceding claims, **characterized in that** the support unit (7) forms an active component (9) and lifts and/or supports the transport unit (4) and/or **in that** the support unit (7) is arranged in a spatially fixed manner with respect to the processing station (2).

4. Processing device (1) according to one of the preceding claims, **characterized in that** the support unit (7) is arranged to be movable, preferably relative to the processing station (2), in particular wherein a drive can be effected by the transport device (3), in particular wherein the support unit (7) is formed by at least two preferably coupled transport units (4) of the or a further transport device (3).

5. Processing device (1) according to one of the preceding claims, **characterized in that** the abutment (8) is designed to match a counter-abutment (10) on the at least one transport unit (4), in particular for producing a form-fit and/or force-fit connection and/or a connection effected via magnetic forces.

6. Processing device (1) according to one of the preceding claims, **characterized in that** the abutment (8) is designed in such a way that the supported transport unit (4) is arranged at a distance from the stator arrangement (5) even when the transport device (3) is deactivated.

7. Processing device (1) according to one of the preceding claims, **characterized in that** the abutment (8) is arranged in such a way that the at least one transport unit (4) contacts the abutment (8) within its stroke path.

8. Processing device (1) according to one of the preceding claims, **characterized in that** the abutment (8) is arranged parallel and/or transversely, in particular perpendicularly, to the stator arrangement (5) and/or **in that** the abutment (8) has an extension which is at least or at most 1.2 times longer than a contact region (11) between the abutment (8) and the counter-abutment (10).

9. Processing device (1) according to one of the preceding claims, **characterized in that** the processing station (2) is set up for introducing a tensile force and/or a compressive force and/or a torque and/or a torsional force as the processing force (F).

10. Processing device (1) according to one of the preceding claims, **characterized in that** the processing station (2) has a press (12) with which the processing force (F) can be introduced, and/or **in that** the processing station (2) has a force measuring sensor (13).

11. Processing device (1) according to one of the preceding claims, **characterized in that** the processing force (F) is greater than a holding force of the transport unit (4) and/or **in that** the support unit (7) is set up to block at least two degrees of freedom of the transport unit (4).

12. Processing device (1) according to one of the preceding claims, **characterized in that** the abutment (8) can be activated, in particular by the or a docking transport unit (4), and/or **in that** the abutment (8) forms at least two contact surfaces (14) with the counter-abutment (10).

13. Processing device (1) according to one of the preceding claims, **characterized in that** the support unit (7) is at least partially surrounded by the stator arrangement (5) and/or **in that** at least one drive segment (17) of the supported transport unit (4) is positioned relative to an outer wall (15) of the support unit (7).

14. Processing device (1) according to one of the preceding claims, **characterized in that** the processing station (2) is set up to process the processing object (6) and/or a content of the processing object (6) without the application of force.

15. Use of a processing device (1) as claimed above for closing pharmaceutical devices (21) and/or for assembling medical devices.

## Revendications

1. Dispositif de traitement (1) comprenant au moins un poste de traitement (2) et au moins un dispositif de transport (3), le dispositif de transport (3) étant conçu pour un transport d'au moins une unité de transport (4) à lévitation magnétique, qui est conçue pour recevoir un objet à traiter (6), vers et/ou depuis ledit au moins un poste de traitement (2), le poste de traitement (2) étant conçu pour appliquer une force de traitement (F) sur l'objet à traiter (6), **caractérisé en ce que** le poste de traitement (2) présente au moins une unité de soutien (7) à laquelle ladite au moins une unité de transport (4) peut être couplée et l'unité de soutien (7) formant une butée (8) contre la force de traitement (F).

2. Dispositif de traitement (1) selon la revendication 1, **caractérisé en ce que** l'unité de transport (4) est conçue modifiable au moins dans l'unité de soutien (7) en ce qui concerne la distance par rapport à un agencement de stator électromagnétique (5), un volume entre l'unité de transport (4) et l'agencement de stator (5) pouvant de préférence être agrandi, en particulier la distance modifiable étant conçue par alimentation en courant de l'agencement de stator (5) et/ou d'un autre agencement de stator (5).

3. Dispositif de traitement (1) selon l'une des revendications précédentes, **caractérisé en ce que** l'unité de soutien (7) forme un composant actif (9) et soulève et/ou soutient l'unité de transport (4) et/ou **en ce que** l'unité de soutien (7) est disposée de manière fixe dans l'espace par rapport au poste de traitement (2).

4. Dispositif de traitement (1) selon l'une des revendications précédentes, **caractérisé en ce que** l'unité de soutien (7) est disposée de manière déplaçable, de préférence par rapport au poste de traitement (2), en particulier un entraînement pouvant être réalisé par le dispositif de transport (3), en particulier l'unité de soutien (7) étant formée par au moins deux unités de transport (4), de préférence couplées, du ou d'un autre dispositif de transport (3).

5. Dispositif de traitement (1) selon l'une des revendications précédentes, **caractérisé en ce que** la butée (8) est réalisée de manière adaptée à une contre-butée (10) sur ladite au moins une unité de transport (4), en particulier pour établir une liaison par complémentarité de formes et/ou par conjugaison de forces et/ou par l'intermédiaire de forces magnétiques.

6. Dispositif de traitement (1) selon l'une des revendications précédentes, **caractérisé en ce que** la butée (8) est réalisée de telle sorte que l'unité de transport (4) soutenue est disposée à distance de l'agencement de stator (5) même lorsque le dispositif de transport (3) est désactivé.

7. Dispositif de traitement (1) selon l'une des revendications précédentes, **caractérisé en ce que** la butée (8) est disposée de telle sorte que ladite au moins une unité de transport (4) entre en contact avec la butée (8) dans le cadre de sa course.

8. Dispositif de traitement (1) selon l'une des revendications précédentes, **caractérisé en ce que** la butée (8) est disposée parallèlement et/ou transversalement, en particulier perpendiculairement, à l'agencement de stator (5) et/ou **en ce que** la butée (8) présente une extension qui est au moins ou au plus 1,2 fois plus longue qu'une zone de contact (11) entre la butée (8) et la contre-butée (10).

9. Dispositif de traitement (1) selon l'une des revendications précédentes, **caractérisé en ce que** le poste de traitement (2) est conçu pour appliquer une force de traction et/ou une force de pression et/ou un moment de rotation et/ou une force de torsion en tant que force de traitement (F).

10. Dispositif de traitement (1) selon l'une des revendications précédentes, **caractérisé en ce que** le poste de traitement (2) présente une presse (12) avec laquelle la force de traitement (F) peut être appliquée, et/ou **en ce que** le poste de traitement (2) comprend un capteur de mesure de force (13).

11. Dispositif de traitement (1) selon l'une des revendications précédentes, **caractérisé en ce que** la force de traitement (F) est supérieure à une force de maintien de l'unité de transport (4) et/ou **en ce que** l'unité de soutien (7) est conçue pour bloquer au moins deux degrés de liberté de l'unité de transport (4).

12. Dispositif de traitement (1) selon l'une des revendications précédentes, **caractérisé en ce que** la butée (8) peut être activée, en particulier par l'unité de transport (4) ou par une unité de transport (4) qui l'accoste, et/ou **en ce que** la butée (8) forme au moins deux surfaces de contact (14) avec la contre-butée (10).

13. Dispositif de traitement (1) selon l'une des revendications précédentes, **caractérisé en ce que** l'unité de soutien (7) est au moins partiellement entourée par l'agencement de stator (5) et/ou **en ce qu'**au moins un segment d'entraînement (17) de l'unité de transport (4) soutenue est positionné vers une paroi extérieure (15) de l'unité de soutien (7).

14. Dispositif de traitement (1) selon l'une des revendications précédentes, **caractérisé en ce que** le poste de traitement (2) est conçu pour traiter l'objet à traiter (6) et/ou un contenu de l'objet à traiter (6) sans application de force.

15. Utilisation d'un dispositif de traitement (1) tel que revendiqué précédemment pour fermer des appareils pharmaceutiques (21) et/ou pour monter des produits médicaux.
